# EUROPÄISCHE PATENTSCHRIFT

(11) **EP 1 423 007 B1**
(45) Veröffentlichungstag und Bekanntmachung des Hinweises auf die Patenterteilung: **06.06.2007**
(21) Anmeldenummer: 02742894.5
(22) Anmeldetag: 12.04.2002
(51) Int. Cl.: A01N 43/653

(54) **BIOREGULATORISCHE WIRKSTOFFKOMBINATION**
BIOREGULATORY COMBINATION OF ACTIVE AGENTS
ASSOCIATION BIOREGULATRICE DE PRINCIPES ACTIFS

(30) Priorität: 12.04.2001 DE 10118458
(43) Veröffentlichungstag der Anmeldung: 02.06.2004
(73) Patentinhaber: BASF Aktiengesellschaft, 67056 Ludwigshafen (DE)
(72) Erfinder: KOBER, Reiner, 67136 Fussgönheim (DE); RADEMACHER, Wilhelm, 67117 Limburgerhof (DE); FRIES, Jürgen, 67067 Ludwigshafen (DE); ZIEGLER, Hans, 67112 Mutterstadt (DE)
(74) Vertreter: Kinzebach, Werner
(86) Internationale Anmeldenummer: PCT/EP2002/004119
(87) Internationale Veröffentlichungsnummer: WO 2002/083732

(56) Entgegenhaltungen:
- EP-A- 0 190 561
- EP-A- 0 199 474
- EP-A- 0 285 880
- EP-A- 0 287 787
- DE-A- 3 627 404
- DE-A- 4 300 452
- GB-A- 2 081 700

## Beschreibung

Die vorliegende Erfindung betrifft die Verwendung bestimmter quaternierter bioregulatorischer Wirkstoffe in Kombination mit Triazol-Derivaten, insbesondere Metconazol oder einem landwirtschaftlich nutzbaren Salz davon. Entsprechende Mittel werden ebenfalls beschrieben.

Als bioregulatorische Wirkstoffe werden auf dem Gebiet der Landwirtschaft unter anderem quaternierte Verbindungen eingesetzt, deren wichtigste Vertreter N,N,N-Trimethyl-N-β-chlorethyl-ammoniumchlorid (CCC, Chlorcholinchlorid, Chlormequatchlorid, DE 12 94 734), N,N-Dimethylmorpholiniumchlorid (DMC, DE 16 42 215) und N,N-Dimethylpiperidiniumchlorid (DPC, MQC, Mepiquatchlorid, DE 22 07 575) sind. Diese Wirkstoffe, insbesondere Chlormequatchlorid und Mepiquatchlorid, werden typischerweise im Getreideanbau in vergleichsweise hohen Dosen eingesetzt. Die Aufwandmenge dieser Wirkstoffe pro Applikation beträgt in der Regel 0,3 - 1,5 kg/ha. Die Produkte sind beispielsweise als wäßrige Wirkstoffkonzentrate (z.B. Cycocel^{®} und Terpal-Marken (Gemische mit Ethephon) als SL-Mischungen, BASF) im Handel erhältlich.

Triazole stellen eine bedeutende Wirkstoffklasse im Bereich der Pestizide dar. Als Inhibitoren der Ergosterol-Biosynthese werden sie primär als Fungizide eingesetzt (siehe beispielsweise DE 195 20 935 A1). Vereinzelt finden Triazole auch als Pflanzenwachstumsregulatoren Anwendung. Darüber hinaus werden verschiedenen der eigentlich fungizid wirkenden Triazolen gelegentlich auch pflanzenwuchsregulierende Eigenschaften zugeschrieben (siehe beispielsweise EP 0 040 345 A2; EP 0 057 357 A2). So hemmen Paclobutrazol und Uniconazole die Gibberellin-Biosynthese und damit die Zellstreckung und -teilung.

Die Wirkstoffe aus der Klasse der quaternierten Ammoniumverbindungen können zusammen mit weiteren bioregulatorisch wirksamen Verbindungen eingesetzt werden. Beispielsweise beschreibt die EP 0 344 533 synergistische Kombinationen mit wachstumsregulierenden 3,5-Dioxo-4-propionylcyclohexancarbonsäure-Derivaten, wie Prohexadion-Calcium. Die DE 43 00 452 A1 schlägt vor, CCC mit Hydroxyethyl-triazolyl-Derivaten wie Tebuconazol zur Hemmung des Pflanzenwachstums einzusetzen. Die Verwendung von Uniconazole zusammen mit CCC wird in der EP 287 787 A1 zur Regulation des Pflanzenwachstums beschrieben. Mittel zur Regulierung der Pflanzenentwicklung, enthaltend eine Mischung aus bestimmten wachstumsregulatorisch wirksamen Triazolverbindungen und einem quaternär substituierten Ammoniumsalz, beispielsweise N,N,N-Trimethyl-N-2-chlorethylammoniumchlorid oder N,N-Dimethylpiperidiniumchlorid, sind in EP-A 0 285 880 beschrieben. DE-A 36 27 404 betrifft ein Mittel zur Wuchshemmung bei Getreide. Dieses enthält eine Wirkstoffkombination aus 1-(4-Chlorphenyl)-5-fluor-4,4-dimethyl-3-hydroxy-2-(1,2,4-triazol-1-yl)-pent-1-en und 2-Chlorethyltrimethyl-ammoniumchlorid und eignet sich zur Hemmung des Längenwachstums bei Getreide. Laut EP-A 0 199 474 sollen Gemische bestimmter Triazolderivate mit Chlormequat bei Gerste eine stärkere Einkürzung des Sprosslängenwachstums bewirken als die Einzelwirkstoffe bei ihrer alleinigen Anwendung. Eine Wirkstoffkombination aus 1-Cyclohexyl-4,4-dimethyl-2-(1,2,4-triazol-1-yl)-pent-1-en-3-ol und 2-Chlorethyltrimethylammoniumchlorid zeichnet sich laut EP-A 0 190 561 durch sehr gute pflanzenwuchsregulierende Eigenschaften aus. In GB-A 2 081 700 wird über einen Synergismus zwischen pflanzenwachstumsregulierenden Triazolderivaten und Chlormequatchlorid bzw. Mepiquatchlorid berichtet. Zusammenfassend lässt sich feststellen, dass die gemeinsame Anwendung von Wirkstoffen aus der Klasse der quaternierten Ammoniumverbindungen mit weiteren bioregulatorisch wirksamen Verbindungen, beispielsweise bestimmten Wirkstoffen aus der Klasse der Triazole, vorgeschlagen worden ist, um das Sprosslängenwachstum von Pflanzen zu beeinflussen.

Die Aufgabe, den Pflanzenwuchs in effektiverer Art und Weise zu beeinflussen, löst die vorliegende Erfindung durch die kombinierte Verwendung von Wirkstoffen aus der Klasse der quaternierten Ammoniumverbindungen und Wirkstoffen aus der Klasse der Triazole, insbesondere dem Triazol-Derivat Metconazol, zur Verbesserung des Wurzelwachstums.
Gegenstand der vorliegenden Erfindung ist daher die Verwendung wenigstens eines Wirkstoffs der Formel (I) 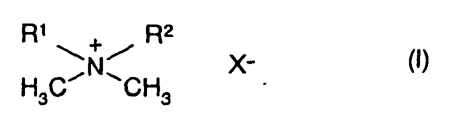 wobei R¹, R² und X die folgenden Bedeutungen haben:
- R¹: Alkyl;
- R²: Alkyl, Cyclopentenyl, Halogen-Alkyl; oder worin R¹ und R² zusammen einen Rest -(CH₂)₅-, -(CH₂)₂-O-(CH₂)₂- oder -(CH₂)-CH=CH-(CH₂)-NH- darstellen;
- X: eine anionische Gruppe,
in Kombination mit
einem bioregulatorisch wirksamen Wirkstoff aus der Klasse der Triazole oder einem landwirtschaftlich nutzbaren Salz davon, zur Verbesserung des Wurzelwachstums.

Die erfindungsgemäße Verwendung der Wirkstoffkombination zeigt im Pflanzenanbau, sowohl in der Landwirtschaft als auch im Gartenbau, Vorteile gegenüber den Einzelwirkstoffen.

Zweck der erfindungsgemäßen Verwendung ist vor allem die Ausbildung einer erhöhten Anzahl an Wurzelsträngen, längerer Wurzeln und/oder einer erhöhten Wurzeloberfläche. Dadurch wird das Aneignungsvermögen der Pflanzen für Wasser und Nährstoffe verbessert. Dies bringt Vorteile insbesondere bei leichten, z.B. sandigen Böden, und/oder bei Niederschlagsmangel. Im Herbst wird insbesondere bei Winterraps, eine größere Speicherwurzel ausgebildet, so daß im Frühjahr das neue Wachstum intensiver erfolgen kann. Das verbesserte Wurzelsystem sorgt im Frühjahr für eine festere Verankerung des Sprosses im Boden, so daß die Pflanzen deutlich standfester sind. Bei anderen Pflanzen repräsentiert die Speicherwurzel ganz oder zum großen Teil das zu erntende Pflanzenorgan (z.B. andere Brassicaceen, wie Rettich und Radieschen, aber auch Zuckerrüben, Möhren oder Chicoree).

Die Verbesserung des Wurzelwachstums ist insbesondere dann von Vorteil, wenn dies bei gleichzeitiger Reduktion des vegetativen Wachstums, also insbesondere unter Hemmung des Sproßlängenwachstums (Einkürzung) und/oder unter Reduktion der Blatt- bzw. Pflanzenmasse erfolgt. Demnach richtet sich die vorliegende Verwendung vorteilhafterweise auf eine Verringerung des Quotienten aus Sproßmasse zu Wurzelmasse.

Diese auf die Wurzelausbildung gerichtete Anwendung erfolgt insbesondere im Getreideanbau, z.B. für Weizen, Gerste, Hafer und Roggen sowie Mais und Reis, und ganz besonders bei Pflanzen, die Speicherwurzeln ausbilden, wie Brassicaceen, z.B. Rettich und Radieschen, vor allem Raps und insbesondere Winterraps, und Zuckerrüben, Möhren oder Chicoree. In diesem Zusammmenhang ist insbesondere der Rapsbau zu nennen, wo die Verbesserung des Wurzelwachstums besonders deutlich zum Tragen kommt. Praktisch kann diese auf die Wurzelausbildung gerichtete Anwendung besondere Bedeutung bei bestimmten Gegebenheiten erlangen, z.B. bei relativ trockenen Böden und/oder während der Phase, in der die Pflanze das Wurzelsystem ausbildet. Bei gleichzeitiger Reduktion des Sproßlängenwachstums ergeben sich durch das verbesserte Wurzelwachstum besondere Vorteile.

Im Rahmen der erfindungsgemäßen Verwendung kann die Wirkstoffkombination weiteren Zwecken dienen. Hierzu gehört z.B. die Beeinflussung des oberirdischen Pflanzenlängenwachstums (wuchs- oder wachstumsregulatorisch). Es können praktisch alle Entwicklungsstadien einer Pflanze erfaßt werden.

So läßt sich beispielsweise das vegetative Sproßwachstum der Pflanzen stark hemmen, was sich insbesondere in einer Reduzierung des Längenwachstums äußert. Die behandelten Pflanzen weisen demgemäß einen gedrungenen Wuchs auf; außerdem ist eine dunklere Blattfärbung zu beobachten. Als vorteilhaft für die Praxis erweist sich eine verminderte Intensität des Wachstums von Gräsern an Straßenrändern, Hecken, Kanalböschungen und auf Rasenflächen wie Park-, Sport- und Obstanlagen, Zierrasen und Flugplätzen, so daß der arbeits- und kostenaufwendige Rasenschnitt reduziert werden kann. Auch bei vielen Zierpflanzenarten ist ein kompakterer Wuchs wünschenswert.

Von wirtschaftlichem Interesse ist auch die Erhöhung der Standfestigkeit von lageranfälligen Kulturen wie Getreide, Mais, Raps und Sonnenblumen. Die dabei verursachte Verkürzung und Verstärkung der Sproßachse verringert oder beseitigt die Gefahr des "Lagerns" (des Umknickens) von Pflanzen unter ungünstigen Witterungsbedingungen vor der Ernte. Wichtig ist auch die wachstumsregulatorische Anwendung zur Hemmung des Längenwachstums und zur zeitlichen Veränderung des Reifeverlaufs bei Baumwolle. Damit wird ein vollständig mechanisiertes Beernten dieser Kulturpflanze ermöglicht. Bei Obst- und anderen Bäumen lassen sich mittels Wachstumsregulation Schnittkosten einsparen. Gleichzeitig wird ein günstigeres Verhältnis zwischen vegetativem Wachstum und Fruchtbildung erzielt. Außerdem kann die Alternanz von Obstbäumen durch Wachstumsregulation gebrochen werden. Durch die wachstumsregulatorische Anwendung kann auch die seitliche Verzweigung der Pflanzen vermehrt oder gehemmt werden. Daran besteht Interesse, wenn z. B. bei Tabakpflanzen die Ausbildung von Seitentrieben (Geiztrieben) zugunsten des Blattwachstums gehemmt werden soll.

Auch läßt sich beispielsweise bei Winterraps die Frostresistenz durch Wachstumsregulation erheblich erhöhen. Dabei werden die jungen Rapspflanzen nach der Aussaat und vor dem Einsetzen der Winterfröste trotz günstiger Wachstumsbedingungen in der vegetativen Entwicklung zurückgehalten. Das Längenwachstum und die Entwicklung einer zu üppigen (und dadurch besonders frostanfälligen) Blatt- bzw. Pflanzenmasse werden gehemmt. Dadurch wird auch die Frostgefährdung solcher Pflanzen verringert, die zum vorzeitigen Abbau der Blühhemmung und zum Übergang in die generative Phase neigen. Auch bei anderen Kulturen, z. B. Wintergetreide ist es vorteilhaft, wenn die Bestände durch wachstumsregulatorische Behandlung im Herbst zwar gut bestockt werden, aber nicht zu üppig in den Winter hineingehen. Dadurch kann der erhöhten Frostempfindlichkeit und - wegen der relativ geringen Blatt- bzw. Pflanzenmasse - auch dem Befall mit verschiedenen Krankheiten (z. B. Pilzkrankheit) vorgebeugt werden. Die Hemmung des vegetativen Wachstums ermöglicht außerdem bei vielen Kulturpflanzen eine dichtere Bepflanzung des Bodens, so daß ein Mehrertrag bezogen auf die Bodenfläche erzielt werden kann.

Außerdem lassen sich durch Wachstumsregulation Mehrerträge sowohl an Pflanzenteilen als auch an Pflanzeninhaltsstoffen erzielen. So ist es beispielsweise möglich, das Wachstum größerer Mengen an Knospen, Blüten, Blättern, Früchten, Samenkörnern, Wurzeln und Knollen zu induzieren, den Gehalt an Zucker in Zuckerrüben, Zukkerrohr sowie Zitrusfrüchten zu erhöhen, den Proteingehalt in Getreide oder Soja zu steigern oder Gummibäume zum vermehrten Latexfluß zu stimulieren. Dabei können die Wirkstoffe Ertragssteigerungen durch Eingriffe in den pflanzlichen Stoffwechsel bzw. durch Förderung oder Hemmung des vegetativen und/oder des generativen Wachstums verursachen. Durch Pflanzenwachstumsregulation lassen sich schließlich sowohl eine Verkürzung bzw. Verlängerung der Entwicklungsstadien als auch eine Beschleunigung bzw. Verzögerung der Reife der geernteten Pflanzenteile vor oder nach der Ernte erreichen.

Von wirtschaftlichem Interesse ist beispielsweise die Ernteerleichterung, die durch das zeitlich konzentrierte Abfallen oder Vermindern der Haftfestigkeit am Baum bei Zitrusfrüchten, Oliven oder bei anderen Arten und Sorten von Kern-, Stein- und Schalenobst ermöglicht wird. Derselbe Mechanismus, das heißt die Förderung der Ausbildung von Trenngewebe zwischen Frucht- bzw. Blatt- und Sproßteil der Pflanze ist auch für ein gut kontrolliertes Entblättern von Nutzpflanzen wie beispielsweise Baumwolle wesentlich.

Durch Wachstumsregulation kann weiterhin der Wasserverbrauch von Pflanzen reduziert werden. Dies ist besonders wichtig für landwirtschaftliche Nutzflächen, die unter einem hohen Kostenaufwand künstlich bewässert werden müssen, z.B. in ariden oder semiariden Gebieten. Durch die wachstumsregulatorische Anwendung läßt sich die Intensität der Bewässerung reduzieren und damit eine kostengünstigere Bewirtschaftung durchführen. Unter dem Einfluß von Wachstumsregulatoren kann es zu einer besseren Ausnutzung des vorhandenen Wassers kommen, weil u. a. die Öffnungsweite der Stomata reduziert wird, eine dickere Epidermis und Cuticula ausgebildet werden, die Durchwurzelung des Bodens verbessert wird, die transpirierende Blattoberfläche reduziert wird, oder das Mikroklima im Kulturpflanzenbestand durch einen kompakteren Wuchs günstig beeinflußt wird.

Für Zierpflanzen, vor allem für Obstbäume und insbesondere für Raps ist die erfindungsgemäße Anwendung von besonderer Bedeutung.

Die Erfindung betrifft somit die Verwendung bioregulatorischer Wirkstoffkombinationen. Die erfindungsgemäße Verwendung stellt eine Kombinationsanwendung dar, d.h. die Verwendung wenigstens eines Wirkstoffs der Formel (I) - im Folgenden zwecks Vereinfachung als "Wirkstoffkomponente (a)" bezeichnet -, und die Verwendung von Triazol-Derivaten, insbesondere Metconazol der Formel (II) oder einem landwirtschaftlich nutzbaren Salz davon - im folgenden zwecks Vereinfachung als "Wirkstoffkomponente (b)" bezeichnet - erfolgt in einem dem Zweck angemessenen Zusammenhang, insbesondere mit Blick auf optimale Wirksamkeit. So können die Wirkstoffkomponenten (a) und (b) prinzipiell gemeinsam in einer Formulierung (Fertigformulierung) oder getrennt in wenigstens zwei unabhängigen Formulierungen angewendet werden. Die Verabreichung getrennter Formulierungen beinhaltet sowohl die gleichzeitige, d.h. zu im Wesentlichen gleichen Zeitpunkten erfolgende oder unmittelbar aufeinanderfolgende, Anwendung, als auch die zeitlich beabstandete, d.h. zu unterschiedlichen Zeitpunkten erfolgende, Anwendung. Die gleichzeitige Anwendung ist in der Regel bevorzugt.

Besondere Wirkstoffe der Formel (I) ergeben sich, wenn Alkyl für Methyl, Ethyl, Isopropyl steht. Als Halogenalkylgruppe ist die 2-Chlorethylgruppe bevorzugt. Bilden die Substituenten zusammen mit dem Stickstoffatom, an das sie gebunden sind, einen cyclischen Rest, so sind R¹ und R² bevorzugt eine Morpholino- oder Piperidinogruppe. X- bedeutet beispielsweise ein Halogenid, wie Bromid und bevorzugt Chlorid; Sulfat; ein Alkylsulfat, wie Methylsulfat; ein Alkylsulfonat, wie Methylsulfonat; ein Borat, wie Pentaborat; oder eine andere in der Landwirtschaft nutzbare anionische Gruppe. Grundsätzlich kommen auch zweiwertige anionische Gruppen in Frage, die in den entsprechenden stöchiometrischen Mengen zum Ammoniumkation eingesetzt werden.

In besonderen Boraten steht X⁻ für für ein Anion der Formel (III)

1/m · [MₓB_{y}O_{z}(A)ᵥ]^{m-} · w (H₂O) (III)

worin
- M: für ein Kation eines landwirtschaftlich nutzbaren Metalls, Wasserstoff oder Ammonium steht;
- B: Bor ist;
- O: Sauerstoff ist;
- A: eine chelat- oder komplexbildende Gruppe ist, die mit wenigstens einem Boratom oder einem landwirtschaftlich nutzbaren Kation assoziiert ist;
- x: einer Zahl von 0 bis 10 entspricht;
- y: einer Zahl von 1 bis 48 entspricht;
- v: einer Zahl von 0 bis 24 entspricht;
- z: einer Zahl von 0 bis 48 entspricht;
- m: einer ganzen Zahl von 1 bis 6 entspricht;
- w: einer Zahl von 0 bis 24 entspricht.

Bevorzugt sind Borate der Formel (III), worin
- x: Null ist; oder
- M: Natrium, Kalium, Magnesium, Calcium, Zink, Mangan, Kupfer, Wasserstoff oder Ammonium ist; und/oder
- y: einer Zahl von 2 bis 20, 2 bis 10 oder 3 bis 10 entspricht; und/oder
- m: 1 oder 2 ist; und/oder
- w: einer Zahl von 0 bis 24 entspricht.

Besonders bevorzugt sind Borate der Formel (III), worin
- y: einer Zahl von 3 bis 7, insbesondere 3 bis 5, entspricht;
- z: einer Zahl von 6 bis 10, insbesondere 6 bis 8, entspricht;
- v: Null ist;
- w: einer Zahl von 2 bis 10, insbesondere 2 bis 8, entspricht.

Ganz besonders bevorzugt sind Borate der Formel (III), worin y = 5; z = 8; v = 0; m = 1; w = 2 bis 3 ist (Pentaborate).

Soweit vorhanden, sind chelat- und komplexbildende Gruppen A vorzugsweise ausgewählt unter Hydroxycarbonsäuren, Carbonsäuren, Alkoholen, Glykolen, Aminoalkoholen, Zuckern, und ähnlichen Verbindungen.

Die Borate können ferner Wasseranteile aufweisen, z.B. als Kristallwasser in freier oder koordinierter Form oder als gebundenes Wasser in Form von Bor-gebundenen Hydroxygruppen.

Weitere Ausgestaltungen und auch die an sich bekannte Herstellung erfindungsgemäßer Borate sind in der PCT/EP98/05149 beschrieben.

Vorzugsweise ist der Wirkstoff der Formel I ausgewählt unter
(a1) N,N,N-Trimethyl-N-β-chlorethyl-ammoniumsalzen der Formel (Ia), 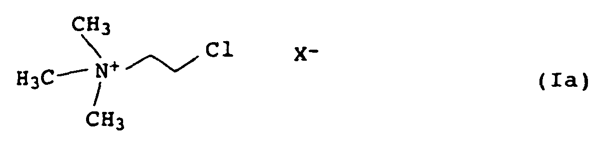
(a2) N,N-Dimethylpiperidiniumsalzen der Formel (Ib) und 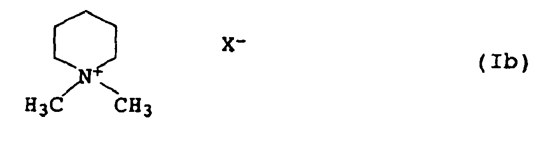
(a3) N,N-Dimethylmorpholiniumsalzen der Formel (Ic) 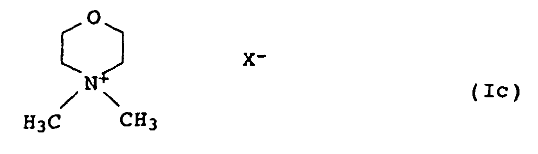
worin X⁻ insbesondere für Cl⁻ oder 1/m · [MₓB_{y}O_{z}(A)ᵥ]^{m-} · w (H₂O) mit den vorstehend genannten Bedeutungen steht.

Besonders bevorzugt sind die Wirkstoffkomponenten (a1) und/oder (a2), insbesondere N,N,N-Trimethyl-N-β-chlorethyl-ammoniumchlorid (CCC) oder das entsprechende Pentaborat bzw. N,N-Dimethylpiperidiniumchlorid (MQC) oder das entsprechende Pentaborat.

Gemäß einer Ausführungsform der vorliegenden Erfindung besteht die Wirkstoffkomponente (a) im wesentlichen aus einer Verbindung der Formel (Ia) oder (Ib) oder einem Gemisch davon.

Zu den Wirkstoffen aus der Klasse der Triazole mit geeigneter bioregulatorischer Wirksamkeit gehören insbesondere (b1) Metconazol, (b2) Triadimenol, (b3) Triadimefon, (b4) Cyproconazol, (b5) Tebuconazol, (b6) Uniconazole, (b7) Paclobutrazol und (b8) Ipconazol. Vor allem in Bezug auf die erfindungsgemäße Verbesserung des Wurzelwachstums werden (b1), (b5) und/oder (b8) bevorzugt verwendet.

Erfindungsgemäß bevorzugt ist die Verwendung von (b1) Metconazol der Formel (II) 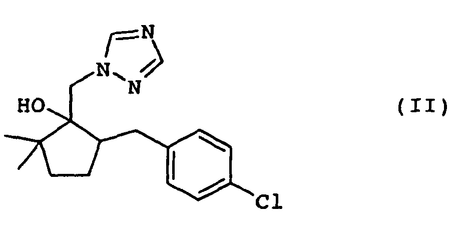 oder eines landwirtschaftlich nutzbaren Salzes davon.

Die hier gewählte Darstellung von Metconazol der Formel (II) schließt isomere Formen dieser Verbindungen mit ein. Insbesondere zu nennen sind Stereoisomere, wie Enantiomere oder Diastereoisomere der Formeln (IIa-d). Neben den im wesentlichen reinen Isomeren gehören zu den Verbindungen der Formeln (II) auch deren Isomerengemsche, z.B. Stereoisomerengemische. Bevorzugt sind hohe Anteile an cis-Isomeren, vorteilhafterweise mit einem cis:trans-Verhältnis von 5:1 bis 20:1.

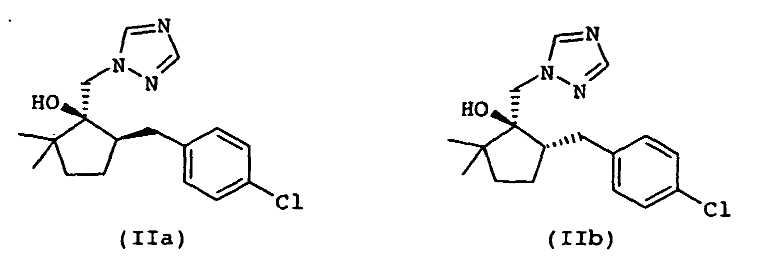

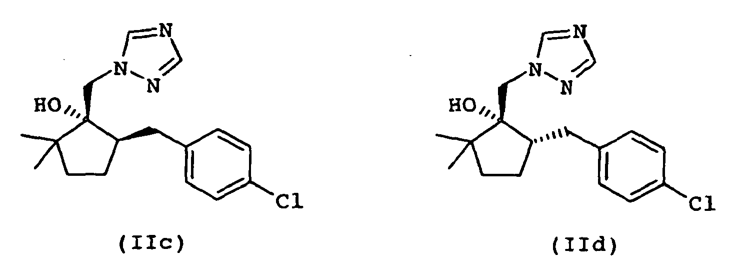

Die landwirtschaftlich nutzbaren Salze von Metconazol sind im vorliegenden Fall bevorzugt Säureadditionssalze.

Anionen von brauchbaren Säureadditionssalzen sind in erster Linie Chlorid, Bromid, Fluorid, Hydrogensulfat, Sulfat, Dihydrogenphosphat, Hydrogenphosphat, Phosphat, Nitrat, Hexafluorsilikat, Hexafluorphosphat.

Gemäß einer Ausführungsform der vorliegenden Erfindung besteht die Wirkstoffkomponente (b) im wesentlichen aus (b1), d.h. einer Verbindung der Formel (II). Gemäß einer weiteren Ausführungsform besteht die Wirkstoffkomponente (b) im wesentlichen aus einer Verbindung, die aus gewählt ist unter (b1) bis (b8), oder einem Gemisch davon.

Gemäß einer besonderen Ausführungsform wird N,N,N-Trimethyl-N-β-chlorethyl-ammoniumchlorid der Formel (Ia) oder N,N-Dimethylpiperidiniumchlorid der Formel (Ib) in Kombination mit Metconazol der Formeln (II) verwendet.

Neben den Wirkstoffkomponenten (a) und (b) kann die erfindungsgemäße Verwendung weitere Wirkstoffe miteinbeziehen. Bei diesen Wirkstoffen kann es sich insbesondere um solche handeln, deren Wirkung der durch die Wirkstoffe der Formel (I) oder Wirkstoffen aus der Klasse der Triazole vermittelten Wirkung ähnlich ist oder diese ergänzt. So kann es von Vorteil sein, zusätzlich zur erfindungsgemäßen Kombination, weitere Bioregulatoren, insbesondere Ethephon, Prohexadion-Calcium oder Trinexapac-ethyl, aber auch Herbizide, insbesondere Imazaquin, und Fungizide anzuwenden. Auch Vitamine, Cofaktoren, Spurenelemente, insbesondere B, Cu, Co, Fe, Mn, Mo und Zn, Mineralstoffe, Aminosäuren und andere esssentielle Nährstoffe können zweckmäßig sein.

Vorteilhafterweise können die an sich zur Bioregulation erforderlichen Aufwandmengen an einzelnen Wirkstoffen im Rahmen der erfindungsgemäßen kombinierten Anwendung reduziert werden. So können die Aufwandmenge an Wirkstoffen der Formel (I) auf weniger als 500 g und vorzugsweise weniger als 350 g pro ha, und die Aufwandmenge an Metconazol der Formel (II) oder landwitschaftlichnutzbarer Salze davon, auf weniger als 100 g und vorzugsweise weniger als 50 g und insbesondere weniger als 30 g pro ha bemessen werden.

Die erfindungsgemäße Verwendung der beschriebenen Wirkstoffe beinhaltet im Rahmen der Behandlung ein Verfahren. Dabei wird eine wirksame Menge an Wirkstoffkomponente (a) und eine wirksame Menge an Wirkstoffkomponente (b), in der Regel der landwirtschaftlichen Praxis entsprechend formuliert, auf die zu behandelnde Anbaufläche ausgebracht. Vorzugsweise werden die Wirkstoffkomponeten durch Spritzung über das Blatt der Pflanze zugeführt.

Zwecks Anwendung können die erfindungsgemäßen Wirkstoffkomponenten in an sich bekannter Weise formuliert werden, z.B. in Form flüssiger Formulierungen, wie emulgierbaren Konzentraten (EC), Suspoemulsionen (SE), Öl-in-Wasser-Emulsionen (EW), Wasser-in-Öl-Emulsionen (EO), wässrigen Suspensionskonzentraten und Öl-Suspensionskonzentraten (SC), Mikroemulsionen (ME), wasserlöslichen Konzentraten (SL), sowie festen Formulierungen, wie wasserdispergierbaren Pulvern (WP), wasserdispergierbaren Granulaten (WG), wasserlöslichen Pulvern (SP), wasserlöslichen Granulaten (SG), etc. Bevorzugt sind flüssig-wäßrige Systeme. Verwendet man die Wirkstoffe der Formel (I) in Form der beschriebenen Borsalze, sind auch Festformulierungen von Vorteil.

Meist werden die Mittel in einer Weise formuliert, daß sie vor ihrem Gebrauch vom Anwender, in der Regel dem Landwirt, in an sich bekannter Weise zweckmäßig zubereitet werden müssen. Beispielsweise kann es erforderlich sein, ein entsprechendes Wirkstoffkonzentrat mit Wasser auf die gewünschte Konzentration zu verdünnen bzw. mit Wasser zu einer fertigen Spritzbrühe zu verarbeiten.

Spritzfähige Brühen enthalten normalerweise 0,0001 bis 10, vorzugsweise 0,001 bis 5, und insbesondere 0,002 bis 2,0 Gew.-% an Wirkstoffkomponente (a) und/oder (b). Zur Herstellung einer üblichen Spritzbrühe können beispielsweise 0,2 bis 5,0, vorzugsweise 0,3 bis 3,0 und insbesondere 0,35 bis 2,0 1 eines Komponente (a) und/oder (b) enthaltenden Wirkstoffkonzentrats mit Wasser auf 10 bis 2000 1, vorzugsweise 50 bis 500 1 und insbesondere 100 bis 1000 1 verdünnt werden. Der Spritzbrühe werden gegebenenfalls 0,1 Gew.-% bis 5 Gew.-% (bezogen auf Spritzbrühe) an weiteren anionischen, kationischen oder nicht-ionischen Tensiden, Hilfsmitteln, Polymeren und/oder weitere Wirkstoffen zugesetzt. Beispielhafte Stoffe für derartige Tenside und weitere Hilfsmittel sind nachstehend beschrieben. Insbesondere sind Stärke und Stärkederivate, z.B. eine Carboxyl- und Sulfonsäuregruppen enthaltende Stärke (Nu-Film der Union Carbide Corp.) sowie Spreitmittel und Extender, wie Vapor Guard der Miller Chemical & Fertilizer Corp., zu nennen.

Die Applikation der Mittel kann in an sich bekannter Weise erfolgen, z.B. durch Versprühen der Spritzbrühen mit einer fahrbaren Spritzmaschine mittels feinstverteilender Düsen. Die hierfür gebräuchlichen Geräte und Arbeitstechniken sind dem Fachmann bekannt.

Die Erfindung betrifft daher auch Mittel sowie die Herstellung von Mitteln zur Behandlung von Pflanzen.

Ein besonderer Gegenstand der vorliegenden Erfindung ist die wurzelwachstumsverbessernde Verwendung von Mitteln, umfassend
(a) wenigstens einen Wirkstoff der Formel (I) 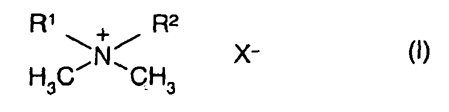 wobei R¹, R² und X die bereits angegebenen Bedeutungen haben;
   und
(b) Metconazol der Formel (II) 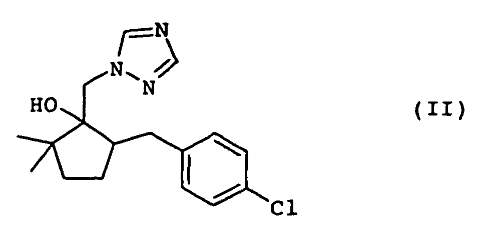
oder ein landwirtschaftlich nutzbares Salz davon.

Eine besondere Ausführungsform dieses Gegenstandes bezieht sich auf Mittel mit hohen Wirkstoffanteilen (Konzentrate). In diesem Fall kann der Anteil der Komponente (a) am Gesamtgewicht des Mittels mehr als 5 Gew.-%, vorzugsweise mehr als 10 Gew.-% und insbesondere mehr als 20 Gew.-% betragen. Andererseits ist es in der Regel zweckmäßig, daß der Anteil der Komponente (a) am Gesamtgewicht des Mittels bei weniger als 50 Gew.-%, vorzugsweise bei weniger als 40 Gew.-% und insbesondere bei weniger als 35 Gew.-% liegt. Der Anteil der Komponente (b) am Gesamtgewicht des Mittels kann für Konzentrate mehr als 0,5 Gew.-%, vorzugsweise mehr als 1 Gew.-% und insbesondere mehr als 2 Gew.-% betragen. Andererseits ist es in der Regel zweckmäßig, wenn der Anteil der Komponente (b) am Gesamtgewicht des Mittels bei weniger als 20 Gew.-%, vorzugsweise bei weniger als 10 Gew.-% und insbesondere bei weniger als 5 Gew.-% liegt.

Die relativen Wirkstoffanteile in Kombinationspräparaten und auch bei getrennter Applikation sind weitgehend variabel. Einem Aspekt zufolge werden verhältnismäßig größere Gewichtsanteile an Wirkstoffkomponente (a) als an Wirkstoffkomponente (b) eingesetzt. Typischerweise liegt dieses Gewichtsverhältnis von (a) zu (b) in einem Bereich von 5:1 bis 30:1, vorzugsweise von 7:1 bis 25:1 und insbesondere von 10:1 bis 20:1. Dies gilt insbesondere für die Verwendung von Metconazol.

Gemäß einer besonderen Ausführungsform beinhalten erfindungsgemäße Mittel als Komponente (c) wenigstens einen weiteren Pflanzenwirkstoff, z.B. Herbizide, Fungizide, Bioregulatoren.

Der Wirkstoffanteil als Summe der Komponenten (a), (b) und (c) am Gesamtgewicht des Mittels macht für Konzentrate in der Regel mehr als 20 Gew.-%, vorzugsweise mehr als 25 Gew.-% und insbesondere mehr als 30 Gew.-% aus. Andererseits beträgt der Wirkstoffanteil als Summe der Komponenten (a), (b) und (c) am Gesamtgewicht des Mittels in der Regel weniger als 70 Gew.-%, vorzugsweise weniger als 60 Gew.-% und insbesondere weniger als 50 Gew.-%.

Gegebenenfalls enthalten die Mittel als Komponente (c1) einen weiteren Bioregulator, insbesondere Ethephon, Prohexadion-Calcium, oder Trinexapac-ethyl.

Der Anteil der Komponente (c1) am Gesamtgewicht des Mittels beträgt - sofern vorhanden - in der Regel 1 bis 40 Gew.-%.

Gemäß einer besonderen Ausführungsform der vorliegenden Erfindung umfassen die Mittel sowohl die Wirkstoffkomponenten (a) und (b) als auch die Wirkstoffkomponente (c1), insbesondere Chlormequatchlorid und/oder Mepiquatchlorid, bzw. -Borate der Formeln (Ia) bzw. (Ib) und Metconazol der Formel (II) zusammen mit Ethephon und vorteilhafterweise mit Trinexapac-ethyl.

Gemäß einer besonderen Ausführungsform der vorliegenden Erfindung umfassen die Mittel als oberflächenaktive Komponente (d) wenigstens ein Tensid. Der Begriff "Tensid" bezeichnet hier grenzflächenaktive bzw. oberflächenaktive Mittel.

Die Komponente (d) dient je nach Art der Formulierung vor allem als Dispergator bzw. Emulgator. Ferner können zumindest Teile der Komponente (d) als Netzmittel dienen.

Prinzipiell brauchbar sind nichtionische, anionische, kationische und amphotere Tenside, wobei Polymer-Tenside sowie Tenside mit Heteroatomen in der hydrophoben Gruppe eingeschlossen sind.

Der Anteil der Komponente (d) am Gesamtgewicht des Mittels beträgt - sofern vorhanden - in der Regel 5 bis 60 Gew.-%, vorzugsweise 10 bis 50 Gew.-% und insbesondere 20 bis 40 Gew.-%.

Gemäß einer besonderen Ausführungsform der vorliegenden Erfindung umfassen die Mittel als Komponente (e) mindestens einen weiteren Hilfsstoff.

Die Komponente (e) kann vielerlei Zwecke erfüllen. Die wahl geeigneter Hilfsstoffe erfolgt den Anforderungen entsprechend üblicherweise durch den Fachmann.

Beispielsweise sind weitere Hilfsstoffe ausgewählt unter
(e1) pflanzenverwertbaren Mineralien und Spurenelementen;
(e2)weiteren Lösungs- oder verdünnungsmitteln;

Zu den pflanzenverwertbaren Mineralien und Spurenelementen gehören insbesondere anorganische Ammoniumsalzen, wie Ammoniumsulfat, Ammoniumnitrat, Ammoniumchlorid, Ammoniumphosphat oder weitere pflanzenverwertbare Mineralien oder Spurenelemente, insbesondere Ammoniumnitrat-Düngergranulate und/oder Harnstoff. Diese können beispielsweise als wässrige und gegebenenfalls gemischte Konzentrate, wie z. B. Ensol-Lösungan, in die erfindungsgemäßen Mittel eingebracht werden.

Sofern vorhanden, beträgt der Anteil der Komponente (e1) am Gesamtgewicht des Mittels in der Regel bis zu 40 Gew.-%, vorzugsweise bis zu 30 Gew.-% und insbesondere bis zu 20 Gew.-%.

Die erfindungsgemäßen Mittel enthalten in der Regel Wasser. Das Wasser dient vor allem zum Lösen der Wirkstoffkomponente (a). In der Regel ist es zweckmäßig, dass der Anteil von Wasser bezogen auf das Gewicht der Komponente (a) bei etwa 30 bis 70 Gew.-%, liegt.

Neben Wasser können die Mittel weitere Lösungsmittel löslicher Bestandteile bzw. Verdünnungsmittel unlöslicher Bestandteile des Mittels umfasssen. Insbesondere das in Wasser an sich nur schwer lösliche Metconazol kann auf diese Art und Weise homogen in die Formulierung eingearbeitet werden.

Prinzipiell brauchbar sind beispielsweise Mineralöle, synthetische Öle sowie pflanzliche und tierische Öle, sowie niedermolekulare hydrophile Lösungsmittel wie Alkohle, Ether, Ketone und ähnliches.

Sofern vorhanden, beträgt der Anteil an den zuvor beschriebenen weiteren Lösungs- bzw. Verdünnungsmitteln am Gesamtgewicht des Mittels in der Regel weniger als 30 Gew.-%, vorzugsweise weniger als 20 Gew.-% und insbesondere weniger als 15 Gew.-%.

Weitere gegebenenfalls brauchbare Zusätze sind z.B. unter Mineralsalzlösungen, welche zur Behebung von Ernährungs- und Spurenelementmängeln eingesetzt werden, nichtphytotoxischen Ölen und Ölkonzentraten, Antidriftreagenzien, Antischaummitteln, insbesondere solchen vom Silicon-Typ, beispielsweise das von der Firma Wacker vertriebene Silicon SL, und ähnlichem zu finden.

Gemäß einer besonderen Ausführungsform betrifft die vorliegende Erfindung die wurzelwachstumsverbessernde Verwendung wäßriger Zusammensetzungen, umfassend
(a) 10 bis 70 Gew.-% wenigstens eines Wirkstoffs, der ausgewählt ist unter (a1) N,N,N-Trimethyl-N-β-chlorethyl-ammoniumchlorid der Formel (Ia) und (a2) N,N-Dimethylpiperidiniumchlorid der Formel (Ib) bzw. den entsprechenden Boraten;
(b) 0,5 bis 20 Gew.-%, vorzugsweise 1 bis 10 Gew.-% und insbesondere 2 bis 5 Gew.-% wenigstens eines Wirkstoffs aus der Klasse der Triazole und insbesondere Metconazol der Formel (II), oder eines landwirtschaftlich nutzbaren Salzes davon.

Im Rahmen der vorliegenden Beschreibung sind Mengenangaben im allgemeinen auf das Gesamtgewicht des Mittels zu beziehen, sofern nicht anderes angeben ist. Der Ausdruck "im wesentlichen" bezeichnet erfindungsgemäß in der Regel ein prozentuales Verhältnis von wenigstens 90 %, vorzugsweise von wenigstens 95 % und insbesondere von wenigstens 98 %.

Die Herstellung erfindungsgemäßer Mittel kann in an sich bekannter Weise erfolgen. Dazu werden zumindest Teile der Komponenten zusammen gegeben. Hierbei ist zu beachten, daß Produkte, insbesondere handelsübliche Produkte, verwendet werden können, deren Bestandteile zu unterschiedlichen Komponenten beitragen können. Beispielsweise kann ein bestimmtes Tensid in einem aprotischen Lösungmittel gelöst sein, so daß dieses Produkt zu verschiedenen Komponenten beitragen kann. Ferner können geringe Anteile an eigentlich unerwünschten Substanzen mit handelsüblichen Produkten eingebracht werden.

Beispielsweise kann man die Wirkstoffe als Feststoff oder in Form wäßriger Hochkonzentrate mit den Hilfsstoffen vermengen. Vorzugsweise werden beispielsweise wäßrige Wirkstofflösungen der quaternierten Wirkstoffe der Formel I in einer Konzentration von 50 bis 80 Gew.-% vorgelegt und unter Rühren die Hilfsstoffe eingearbeitet. Anschließend kann man das Gemisch mit einem Konzentrat, von Triazol-Wirkstoffen, insbesondere einem Metconazol-Konzentrat in einem geeigneten Lösungsmittel versetzen.

Das Vermengen kann in an sich bekannter Weise erfolgen, z.B. durch Homogenisieren mit geeigneten Vorrichtungen wie KPG- oder Magnetrührern, oder den entsprechenden großtechnischen Rührwerken.

Im Rahmen der vorliegenden Beschreibung umfassen Begriffe wie Alkyl, Alkoxy, etc. geradkettige oder verzweigte Kohlenwasserstoffgruppen, wie Methyl, Ethyl, n-Propyl, i-Propyl, n-Butyl, i-Butyl, sek-Butyl, t-Butyl, n-Pentyl, n-Hexyl, n-Octyl, 2-Ethylhexyl, n-Nonyl, iso-Nonyl, n-Decyl, iso-Decyl, n-Undecyl, iso-Undecyl, n-Dodecyl, iso-Dodecyl, n-Tridecyl, iso-Tridecyl, Stearyl, n-Eicosyl, vorzugsweise mit - soweit nichts anderes angegeben ist - 1 bis 8, insbesondere 1 bis 6 und besonders bevorzugt 1 bis 4 Kohlenstoffatomen.

Der Begriff "Halogen" steht vorzugsweise für Fluor, Chlor, Brom und Iod, insbesondere für Fluor und vor allem für Chlor.

Die Erfindung wird durch die nachfolgenden Beispiele näher erläutert:

### Herstellungsbeispiele

### Referenzbeispiel 1: Formulierungen

Die in Beispiel 1 eingesetzten Tankmischungen werden hergestellt, indem man ein Emulsionskonzentrat mit 90 g/l Metconazol der Formel (II) und ein wäßriges Konzentrat mit 600 g/l Mepiquatchlorid (MQC) per Magnetrührer miteinander verrührt.

Die in Beispiel 2 eingesetzten Formulierungen werden hergestellt, indem man ein Emulsionskonzentrat mit 60 g/l Metconazol der Formel (II) und/oder ein wäßriges Konzentrat mit 460 g/l Mepiquatchlorid in entsprechenden Mengen einbringt. Die Kombination aus Mepiquatchlorid und Metconazol wird in Form einer wäßrigen SL-Fertigmischung eingesetzt, die 21 g/l Metconazol, 300 g/l Mepiquatchlorid und 610 g/l weitere Formulierungshilfsmitel enthält.

### Beispiele 1: Biologische Wirksamkeit (Sproßlängenwachstum)

Winterraps (cv. Pronto) wurde im Herbst (13.09.2000) ausgesät und etwa einen Monat später (19.10.2000) den Angaben in Tabelle 1 entsprechend behandelt. Einige Wochen später wurde das Sproßlängenwachstum sowie die Wurzelbildung beurteilt (A1 am 26.10.2000 und A2 am 16.11.2000). Die Ergebnisse zum Längenwachstum sind in Tabelle 1 zusammengestellt.

**Tabelle 1: Sproßlängenwachstum in Winterraps (Bonitur A1 and A2)**

| Wirkstoff | [g/ha] | Stadium A1: Rel. Länge | Einkürzung [%] | Stadium A2: Rel. Länge | Einkürzung [%] |
|---|---|---|---|---|---|
| MQC | 400 | 100 | 0 | 96 | 4 |
| Metconazol | 21 | 81 | 19 | 61 | 39 |
| MQC + Metconazol | 400 + 21 | 75 | 25 | 54 | 46 |

Erwartet wurde eine gemäß Colbi-Formel berechnete Einkürzung von 19 % für die Bonitur A1 und von 41,4 % für die Bonitur A2. Die für die erfindungsgemäße Wirkstoffkombination gefundenen Einkürzungen von 25 % bzw. 46 % belegen die synergistische Wirkungsverstärkung.

### Beispiele 2: Biologische Wirksamkeit (Wurzelwachstum)

winterraps (cv. Pronto) wurde im Herbst (13.09.2000) ausgesät und etwa einen Monat später (19.10.2000) den Angaben in Tabelle 2 entsprechend behandelt. Ein Teil der Pflanzen wurde im Herbst am 07.12.2000, ein anderer Teil im Frühling am 03.04.2001 geernet und auf folgende morphologische Parameter untersucht: Pflanzenhöhe; Frisch- und Trockengewicht des Sprosses (Trocknung: 24h bei 105 °C); Gesamtfläche aller Blätter; SPAP (mit einem Minolta Chlorophyll-Meter SPAP 502 bestimmte relative Einheiten zur Grünfärbung); Frisch- und Trockengewicht der Wurzeln (Trocknung: 24h bei 105 °C); Frischgewicht der Speicherwurzel; Länge, Oberfläche und Volumen der Feinwurzeln sowie Anzahl der Wurzelspitzen (Scanning und WinRhizo-Bestimmung). Die jeweils auf die nichtbehandelte Kontrolle bezogenen Ergebnisse sind in Tabelle 2 zusammengestellt, wobei die Werte für die im Herbst geernteten Pflanzen jeweils an erster Stelle und die Werte für die im Frühling geernteten Pflanzen jeweils an zweiter Stelle angegeben sind.

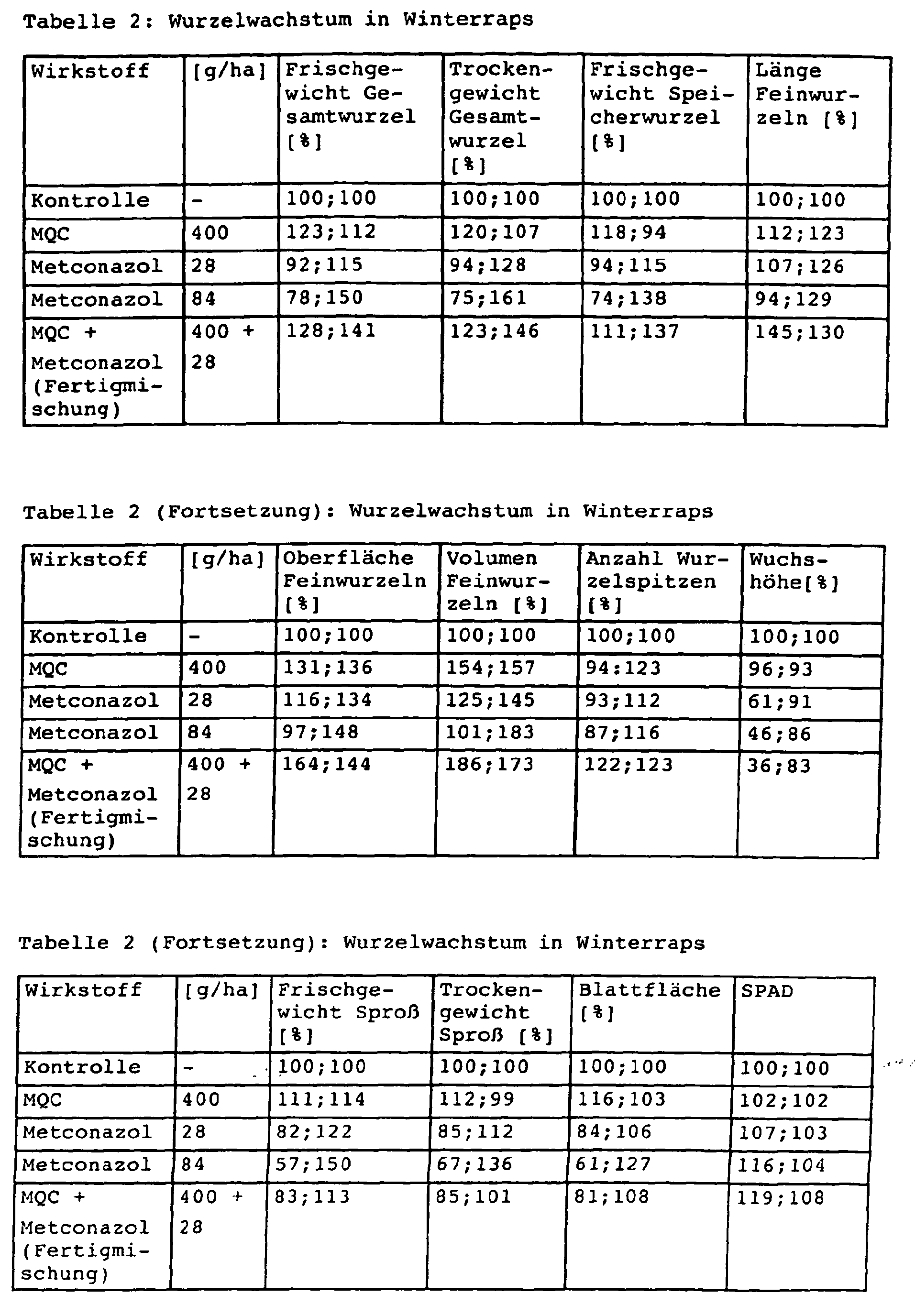

Ferner wurde bei Behandlung mit der erfindungsgemäßen Wirkstoffkombination im Vergleich mit den Einzelwirkstoffen eine erhöhte Anzahl an Wurzelsträngen, längere Wurzeln und/oder eine erhöhte Wurzeloberfläche beobachtet. Insbesondere zeigt sich, dass die erfindungsgemäße Behandlung zu einem für die Überwinterung und einen kräftigen Frühlingsstart der Pflanze vergleichsweise günstigeren Verhältnis von Sproßmasse zu Wurzelmasse führt.

## Patentansprüche

1. Verwendung eines Wirkstoffs der Formel (I) 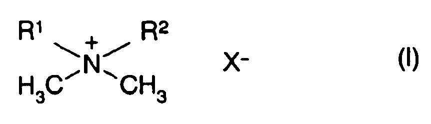 wobei R¹, R² und X die folgenden Bedeutungen haben:
R¹ C₁-C₄-Alkyl;
R² C₁-C₄-Alkyl, Cyclopentenyl, Halogen-C₁-C₆-Alkyl; oder worin R¹ und R² zusammen einen Rest -(CH₂)₅-, -(CH₂)₂-O-(CH₂)₂- oder -(CH₂)-CH=CH-(CH₂)-NH- darstellen;
X eine anionische Gruppe,
in Kombination mit
einem bioregulatorisch wirksamen Wirkstoff aus der Klasse der Triazole oder einem landwirtschaftlich nutzbaren Salz davon,
zur Verbesserung des Wurzelwachstums.

2. Verwendung nach Anspruch 1, wobei sich die Verbesserung des Wurzelwachstums in einer erhöhten Anzahl an Wurzelsträngen, in längeren Wurzeln und/oder einer erhöhten Wurzeloberfläche äussert.

3. Verwendung nach einem der vorhergenden Ansprüche, im Rapsbau.

4. Verwendung nach einem der vorhergehenden Ansprüche, **dadurch gekennzeichnet, daß** der Wirkstoff der Formel (I) ausgewählt ist unter
(a1) N,N,N-Trimethyl-N-β-chlorethyl-ammoniumsalzen der Formel (Ia), 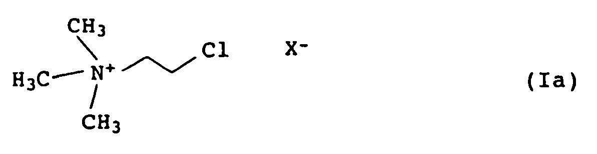
(a2) N,N-Dimethylpiperidiniumsalzen der Formel (Ib) 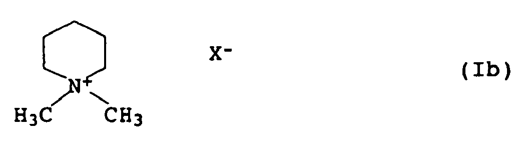 und
(a3) N,N-Dimethylmorpholiniumsalzen der Formel (Ic) 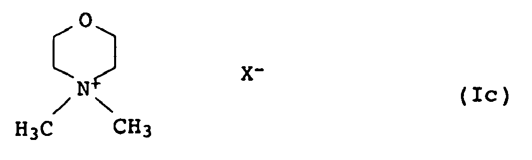
worin X⁻ für Cl- oder 1/m · [MₓB_{y}O_{z}(A)ᵥ]^{m-} · w (H₂O) steht, wobei
M für ein Kation eines landwirtschaftlich nutzbaren Metalls, Wasserstoff oder Ammonium steht ;
B Bor ist;
O Sauerstoff ist;
A eine chelat- oder komplexbildende Gruppe ist, die mit wenigstens einem Boratom oder einem landwirtschaftlich nutzbaren Kation assoziiert ist;
x einer Zahl von 0 bis 10 entspricht;
y einer Zahl von 1 bis 48 entspricht;
v einer Zahl von 0 bis 24 entspricht;
z einer Zahl von 0 bis 48 entspricht;
m einer ganzen Zahl von 1 bis 6 entspricht;
w einer Zahl von 0 bis 24 entspricht.

5. Verwendung nach einem der vorhergenden Ansprüche, **dadurch gekennzeichnet, daß** die Aufwandmenge an Wirkstoffen der Formel (I) pro ha weniger als 500 g und vorzugsweise weniger als 350 g beträgt.

6. Verwendung nach einem der vorhergenden Ansprüche, **dadurch gekennzeichnet, daß** der Wirkstoff aus der Klasse der Triazole ausgewählt ist unter Metconazol, Triadimenol, Triadimefon, Cyproconazol, Tebuconazol, Uniconazole, Paclobutrazol und Ipconazol.

7. Verwendung nach einem der vorhergenden Ansprüche, **dadurch gekennzeichnet, daß** der Wirkstoff aus der Klasse der Triazole Metconazol der Formel (II) 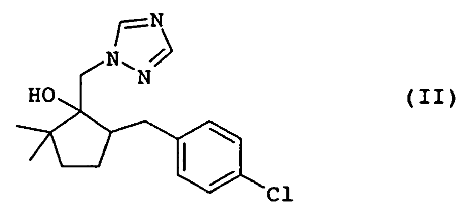 ist.

8. Verwendung nach Anspruch 7, **dadurch gekennzeichnet, daß** die Aufwandmenge an Metconazol der Formel (II) oder des landwirtschaftlich nutzbaren Salzes davon pro ha weniger als 100 g und vorzugsweise weniger als 50 g beträgt.

9. Verwendung nach einem der vorhergehenden Ansprüche, wobei der Wirkstoff der Formel (I) N,N,N-Trimethyl-N-β-chlorethylammoniumchlorid der Formel (Ia) oder N,N-Dimethylpiperidinumchlorid der Formel (Ib) ist und der Wirkstoff aus der Klasse der Triazole Metconazol der Formel (II) ist.

10. Verwendung nach einem der vorhergehenden Ansprüche, wobei der Wirkstoff der Formel (I) ein N,N,N-Trimethyl-N-β-chlorethylammoniumsalz der Formel (Ia) oder N,N-Dimethylpiperidinumsalz der Formel (Ib) ist, worin X⁻ für [MₓB_{y}O_{z}(A)ᵥ]^{m-} · w (H₂O) steht, wobei x = Null, y = 5, z = 8, v = Null, m = 1 und w = 2 bis 3 sind, und der Wirkstff aus der Klasse der Triazole Metconazol der Formel (II) ist.

## Claims

1. The use of an active ingredient of the formula (I) 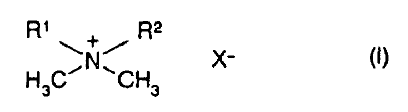 where R¹, R² and X have the following meanings:
R¹ is C₁-C₄-alkyl;
R² is C₁-C₄-alkyl, cyclopentenyl, halo-C₁-C₆-alkyl; or where R¹ and R² together are a radical -(CH₂)₅-, -(CH₂)₂-O-(CH₂)₂- or -(CH₂)-CH=CH-(CH₂)-NH-;
X is an anionic group,
in combination with
a bioregulatory active ingredient from the triazole class or an agriculturally utilizable salt thereof
for improving root growth.

2. The use according to claim 1, wherein the improvement of root growth is manifested in an increased number of root branches, in longer roots and/or in an increased root surface area.

3. The use according to one of the preceding claims in the production of oilseed rape.

4. The use according to one of the preceding claims, wherein the active ingredient of the formula I is selected from among
(a1) N,N,N-trimethyl-N-β-chloroethylammonium salts of the formula (Ia) 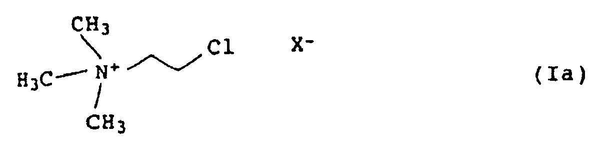
(a2) N,N-dimethylpiperidinium salts of the formula (Ib) 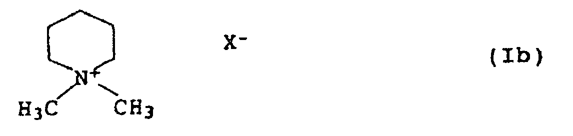 and
(a3) N,N-dimethylmorpholinium salts of the formula (Ic) 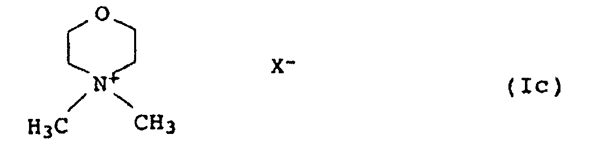
where X⁻ is Cl⁻ or 1/m . [MₓB_{y}O_{z}(A)ᵥ]^{m-} . w (H₂O), where
M is a cation of an agriculturally utilizable metal, hydrogen or ammonium;
B is boron;
O is oxygen;
A is a chelating or complexing group which is associated with at least one boron atom or an agriculturally utilizable cation;
x corresponds to a number of from 0 to 10;
y corresponds to a number of from 1 to 48;
v corresponds to a number of from 0 to 24;
z corresponds to a number of from 0 to 48;
m corresponds to an integer of from 1 to 6;
w corresponds to a number of from 0 to 24.

5. The use according to one of the preceding claims, **characterized in that** the application rate of active ingredients of the formula (I) amounts to less than 500 g and preferably less than 350 g per ha.

6. The use according to one of the preceding claims, wherein the active substance is selected from the class of the triazoles, among metconazole, triadimenol, triadimefon, cyproconazole, tebuconazole, uniconazole, paclobutrazole and ipconazole.

7. The use according to one of the preceding claims, wherein the active substance from the class of the triazoles is metconazole, of the formula (II)

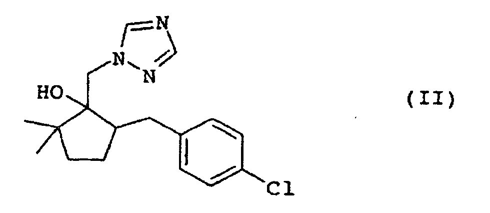

8. The use according to claim 7, **characterized in that** the application rate of metconazole, of the formula (II), or of the agriculturally utilizable salt thereof amounts to less than 100 g and preferably less than 50 g per ha.

9. The use according to one of the preceding claims, wherein the active substance of the formula (I) is N,N,N-trimethyl-N-β-chloroethylammonium chloride, of the formula (Ia), or N,N-dimethylpiperidinium chloride, of the formula (Ib), and the active substance from the class of the triazoles is metconazole, of the formula (II).

10. The use according to one of the preceding claims, wherein the active substance of the formula (I) is an N,N,N-trimethyl-N-β-chloroethylammonium salt of the formula (Ia) or N,N-dimethylpiperidinium salt of the formula (Ib), wherein X⁻ represents [MₓB_{y}O_{z}(A)ᵥ]^{m-} · w (H₂O), where x = zero, y = 5, z = 8, v = zero, m = 1 and w = 2 to 3, and the active substance from the class of the triazoles is metconazole, of the formula (II).

## Revendications

1. Utilisation d'un principe actif de formule (I) 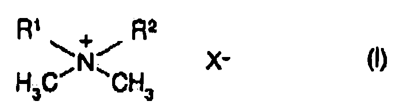 dans laquelle R¹, R² et X ont les significations suivantes :
R¹ alkyle en C₁ à C₄,
R² alkyle en C₁ à C₄, cyclopentényle, halogéno (C₁-C₆)alkyle, ou dans laquelle R¹ et R² représentent ensemble un radical -(CH₂)₅-, -(CH₂)₂-O-(CH₂)₂- ou -(CH₂)-CH=CH-(CH₂)-NH-,
X un groupe anionique,
en combinaison avec un principe actif biorégulateur de la classe des triazoles ou de l'un de leurs sels utilisables en agriculture,
pour améliorer la croissance des racines.

2. Utilisation suivant la revendication 1, dans laquelle l'amélioration de la croissance des racines se manifeste par un plus grand nombre de faisceaux racinaires, des racines plus longues et/ou une plus grande surface des racines.

3. Utilisation suivant l'une quelconque des revendications qui précèdent, dans la culture de colza.

4. Utilisation suivant l'une quelconque des revendications qui précèdent, **caractérisée en ce que** le principe actif de formule (I) est choisi parmi :
(a1) des sels de N,N,N-triméthyl-N-β-chloroéthylammonium de formule (Ia), 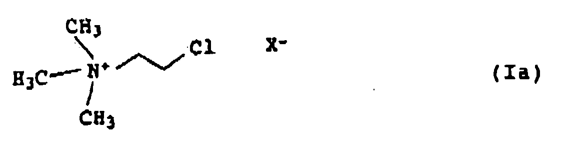
(a2) des sels de N,N-diméthylpipéridinium de formule (Ib) 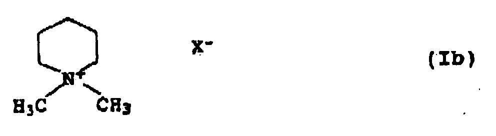 et
(a3) des sels de N,N-diméthylmorpholinium de formule (Ic) 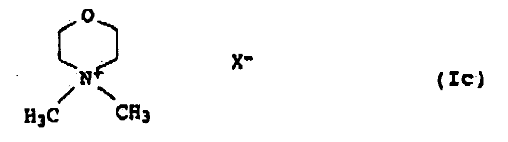
où X⁻ représente Cl⁻ ou 1/m. (MₓB_{y}O_{z}(A)ᵥ)^{m-}.w (H₂O), avec
M représentant un cation d'un métal utilisable en agriculture, de l'hydrogène ou de l'ammonium,
B est du bore,
O est de l'oxygène,
A est un groupe chélateur ou complexant associé à au moins un atome de bore ou un cation utilisable en agriculture,
x correspond à un nombre de 0 à 10,
y correspond à un nombre de 1 à 48,
v correspond à un nombre de 0 à 24,
z correspond à un nombre de 0 à 48,
m correspond à un nombre entier de 1 à 6,
w correspond à un nombre de 0 à 24.

5. Utilisation suivant l'une quelconque des revendications qui précèdent, **caractérisée en ce que** la quantité utilisée de principes actifs de formule (I) par ha est de moins de 500 g et de préférence de moins de 350 g.

6. Utilisation suivant l'une quelconque des revendications qui précèdent, **caractérisée en ce que** le principe actif est choisi dans la classe des triazoles parmi le metconazole, le triadiménole, le triadiméfon, le cyproconazole, le tébuconazole, l'uniconazole, le paclobutrazole et l'ipconazole.

7. Utilisation suivant l'une quelconque des revendications qui précèdent, **caractérisée en ce que** le principe actif de la classe des triazoles est le metconazole de formule (II)

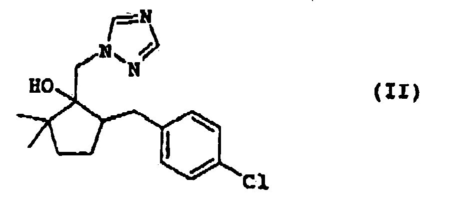

8. Utilisation suivant la revendication 7, **caractérisée en ce que** la quantité utilisée de metconazole de formule (II) ou de son sel utilisable en agriculture, par ha, est de moins de 100 g et de préférence de moins de 50 g.

9. Utilisation suivant l'une quelconque des revendications qui précèdent, dans laquelle le principe actif de formule (I) est du chlorure de N,N,N-triméthyl-N-β-chloréthylammonium de formule (Ia) ou du chlorure de N,N-diméthylpipéridinium de formule (Ib) et le principe actif de la classe des triazoles est le metconazole de formule (II).

10. Utilisation suivant l'une quelconque des revendications qui précèdent, dans laquelle le principe actif de formule (I) est un sel de N,N,N-triméthyl-N-β-chloréthylammonium de formule (Ia) ou un sel de N,N-diméthylpipéridinium de formule (Ib), dans laquelle X⁻ représente [MₓB_{y}O_{z}(A)ᵥ]^{m-}.w (H₂O), dans laquelle x = zéro, y = 5, z = 8, v = zéro, m = 1 et w = 2 à 3, et le principe actif de la classe de triazoles est le metconazole de formule (II).
